Europäisches Patentamt

(19) European Patent Office

Office européen des brevets

(11) Publication number: **0 248 908 B1**

## (12) EUROPEAN PATENT SPECIFICATION

(45) Date of publication of patent specification:
24.07.91 Bulletin 91/30

(51) Int. Cl.$^5$: **G11B 17/04, G11B 23/03**

(21) Application number: **86906943.5**

(22) Date of filing: **21.11.86**

(86) International application number:
**PCT/JP86/00597**

(87) International publication number:
**WO 87/03414 04.06.87 Gazette 87/12**

(54) **DISK CARTRIDGE HAVING SHUTTER AND A DEVICE FOR OPENING AND CLOSING THE SHUTTER.**

(30) Priority: **22.11.85 JP 180502/85 U**

(43) Date of publication of application:
**16.12.87 Bulletin 87/51**

(45) Publication of the grant of the patent:
**24.07.91 Bulletin 91/30**

(84) Designated Contracting States:
**AT CH DE FR GB IT LI SE**

(56) References cited:
**EP-A- 0 144 068**
**EP-A- 0 157 588**
**DE-A- 3 503 872**
**FR-A- 2 517 862·**
**GB-A- 2 155 233**

(56) References cited:
**JP-A- 171 771**
**JP-U-58 140 570**
**JP-U-59 145 760**
**PATENT ABSTRACTS OF JAPAN, vol. 11, no. 270 (P-611)[2717], 3rd September 1987; & JP-A-62 71 054 (SONY CORP.) 01-04-1987**

(73) Proprietor: **SONY CORPORATION**
**7-35 Kitashinagawa 6-Chome Shinagawa-ku Tokyo 141 (JP)**

(72) Inventor: **SUZUKI, Masayuki**
**Sony Corporation 7-35, Kitashinagawa 6-chome**
**Shinagawa-ku Tokyo 141 (JP)**

(74) Representative: **Cotter, Ivan John et al**
**D. YOUNG & CO. 10 Staple Inn**
**London WC1V 7RD (GB)**

## Description

This invention relates to disc cartridge apparatus, and more particularly to a disc cartridge having a shutter, in combination with a device for opening and closing the shutter. The disc may, for example, be an optical disc or an opto-magnetic disc.

French patent specification FR-A-2 517 682 (GB-A-2 113 890) discloses a disc cartridge with a shutter, and a device for opening and closing the shutter. The shutter has a cut-out for engagement with a pivoting arm of the shutter opening and closing device, and a recess is provided in the side of the disc cartridge covered by the shutter. When the cartridge reaches its final position within a holder, a pin of the opening arm engages both in the cut-out of the shutter and in the recess of the cartridge.

According to the present invention there is provided disc cartridge apparatus comprising a disc cartridge, having a shutter movable between a first position covering signal read and write apertures in said cartridge and a second position exposing said apertures in a direction perpendicular to the direction of insertion of the cartridge into said apparatus, in combination with a device for opening and closing said shutter ;

said cartridge comprising :

an engaging hole in the front wall of said shutter ; and a recess in the edge of said cartridge which is leading when said cartridge is correctly inserted into said device, said recess being covered when said shutter is in said first position and exposed when said shutter is in said second position ;

said device comprising :

a pair of rotary arms one of which engages with said engaging hole as said cartridge is inserted into said device and is turned as said cartridge is further inserted, thereby sliding said shutter from said first to said second position, and the other of which engages with said recess when said recess has been exposed by said sliding of said shutter ;

and wherein :

failure of said other rotary arm to engage with said recess inhibits full insertion of said cartridge into said device.

The invention will now be described by way of example with reference to the accompanying drawings, throughout which like parts are referred to by like references, and in which :

Figure 1 is a perspective view showing the shutter opening and closing device of a disc cartridge apparatus according to the present invention ;

Figure 2 is a perspective view from above of a disc cartridge ;

Figure 3 is an exploded perspective view of the cartridge ;

Figure 4 is a plan view showing the inner side of the upper half of the cartridge ;

Figure 5 is a perspective view from below of the cartridge ;

Figure 6 is a perspective view showing the shutter of the cartridge being opened ;

Figure 7 is a plan view showing the cartridge inserted into the shutter opening and closing device ;

Figure 8 is a plan view showing first and second shutter opening and closing arms ;

Figure 9 is a perspective view showing the cartridge abutting on and engaging with the first and second arms ;

Figures 10 and 11 are plan views showing the shutter of the cartridge opened and closed, respectively ; and

Figure 12 is a plan view showing the cartridge inserted.

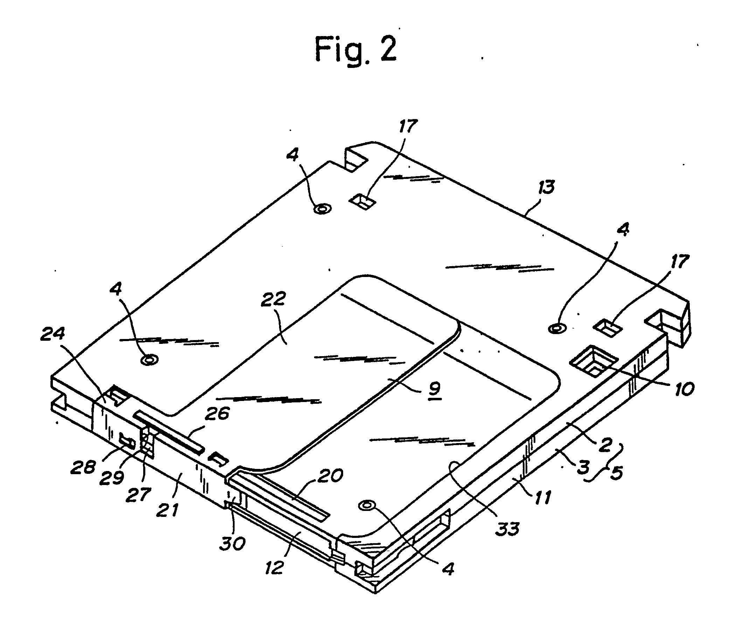

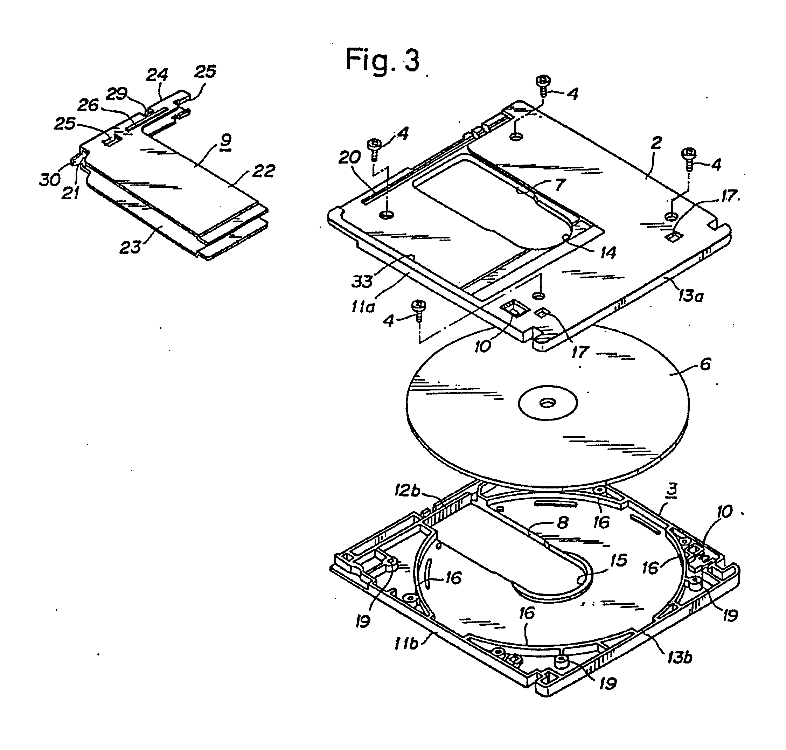

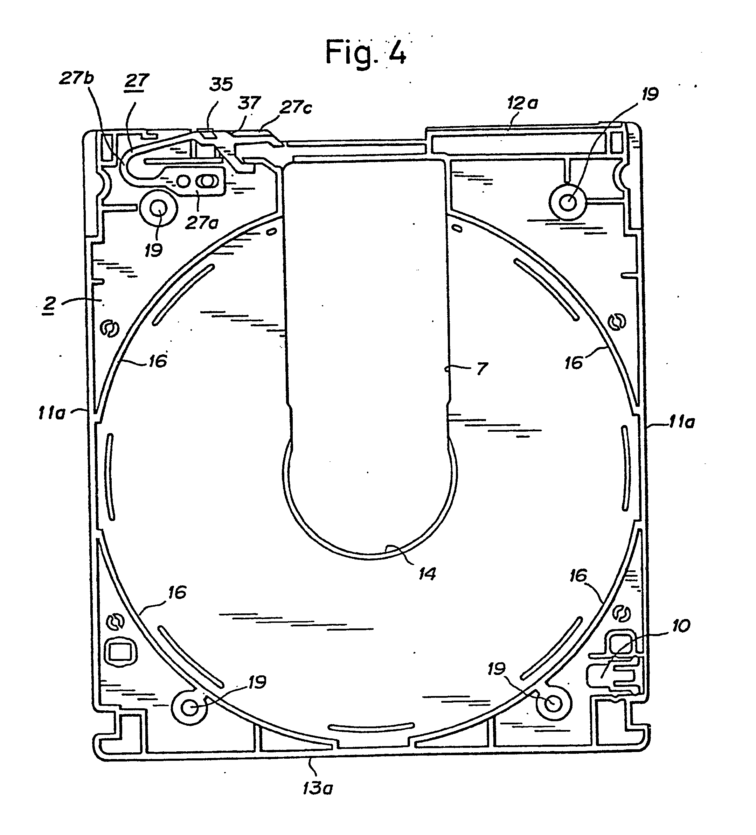

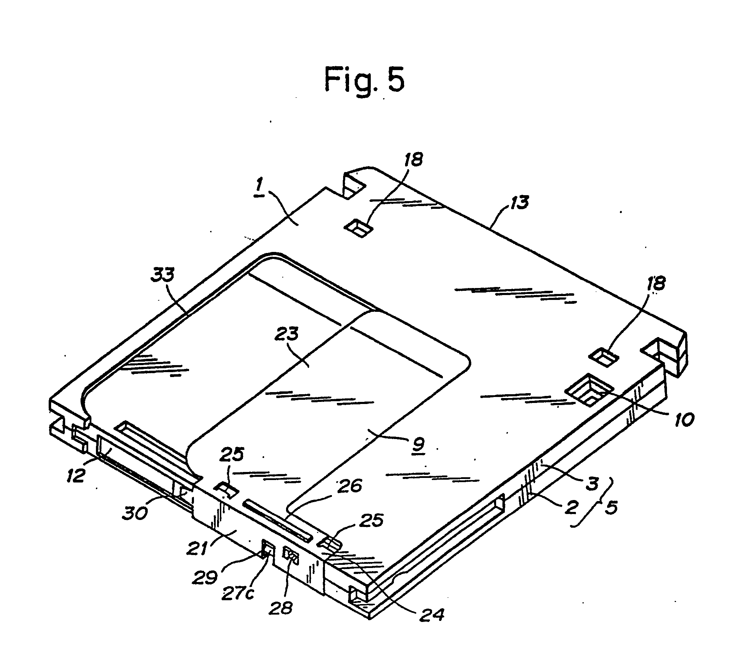

A disc cartridge 1 will first be described with reference to Figures 2 to 6. As shown in Figures 2 and 3, the cartridge 1 comprises a housing 5 formed of substantially flat plate-like rectangular upper and lower halves 2 and 3 formed of moulded synthetic resin and secured in abutment to each other by screws 4 ; a circular disc 6, such as an opto-magnetic disc, rotatably accommodated within the housing 5 and having signal recording sides on both surfaces thereof ; and a shutter 9 slidably mounted on the housing 5 for opening or closing signal read and write apertures 7 and 8 provided in the halves 2 and 3 of the housing 5, the apertures 7 and 8 being confronted by an optical pickup for reading or writing signals from and on the disc 6. The cartridge 1 is thus of the double usable side type.

The halves 2 and 3 of the housing 5 are symmetrical except that write inhibit members 10 for inhibiting the writing on the disc 6 are provided at the same respective positions, so that they are in opposite positions to each other when the halves 2 and 3 are brought into abutting engagement. The halves 2 and 3 define a space sufficient to accommodate the disc 6 rotatably. On the perimeter of the halves 2 and 3, there are formed upright walls 11a, 11b, 12a, 12b, 13a and 13b defining left and right side wall sections 11, a front wall section 12, and a rear wall section 13. At the centre of the halves 2 and 3, there are formed disc table insertion apertures 14 and 15 to be confronted by a disc table of a disc drive unit which rotates the disc 6 and is provided in a recording and/or reproducing apparatus. The apertures 7 and 8 are formed radially of the disc 6 in continuation of the insertion apertures 14 and 15 and with the same width as the diameters thereof. On the inner sides of the halves 2 and 3, arcuate ribs 16 project on the circumference of a circle slightly larger than the outside diameter of the disc 6 and centred about the disc table insertion apertures 14 and 15, such that, when the ribs 16 abut each other, they define a disc container, while also delimiting position control wall means to control the horizontal position of the disc 6.

Reference apertures 17 and 18 are formed at both corners of the rear wall sections 13 opposite to the front wall sections 12, to receive positioning pins of the recording and/or reproducing apparatus when the cartridge 1 is attached thereto. Towards the rear side of the halves 2 and 3 in the vicinity of the reference apertures 17 and 18, and within the area delimited by portions of the walls 11a, 11b, 12a, 12b, 13a and 13b at the front corners of the halves 2 and 3 that are associated with the shutter 9 and the circular ribs 16, there are provided pairs of tapped bosses 19, for the screws 4 which secure the halves 2 and 3 together.

On the outer sides along the front sides of the halves 3 provided with the apertures 7 and 8, there are formed oppositely-positioned slide guide slots 20 for guiding the shutter 9 to open and close the apertures 7 and 8.

The shutter 9 is fabricated in the form of a letter U from sheet metal such as stainless steel. The shutter 9 comprises a front wall 21 forming a connecting web for upper and lower shutter plates 22 and 23 formed integrally with the connecting web, and of a size sufficient to cover the apertures 7, 8, 14 and 15 simultaneously. The front wall 21 and portions thereof connected to the plates 22 and 23 make up a slide guide section 24 for the housing 5. The section 24 is extended from the side edges of the plates 22 and 23 -along the slide guide slots 20. Thus, the shutter 9 is substantially L-shaped in plan view.

On the upper and lower sides of the slide guide section 24, guide tabs 25 are formed facing each other, so as to be engaged with and guided by the guide slots 20. The tabs 25 are formed by partially cutting the section 24 and bending the partially cut portions inwards. Between the tabes 25, a rib 26 is formed by drawing, in order to prevent flexure of the section 24 in the direction of the thickness thereof, otherwise caused by making the section 24 longer than the width of the plates 22 and 23.

Towards one end of the front wall 21 of the shutter 9, there is formed a bend 28 by partial cutting and bending. The bend 28 engages with a locking member 27 when the shutter 9 is at a first position closing the apertures 7 and 8. An engaging hole 29 is provided on the shutter 9 extending from the front wall 21 towards the upper plate 22 as shown in Figure 2. Into the hole 29 is selectively engaged a shutter opening and closing pin which is a protuberance provided on one end of each of a pair of shutter opening and closing arms provided in the recording and/or reproducing apparatus. The hole 29 is an L-shaped cut-out extending from the front wall 21 towards the upper shutter plate 22, such that the shutter opening and closing pin engages in the cut-out normal to the thickness of the cartridge 1. The hole 29 is situated away from the centre in the left-to-right direction of the housing 5 when the shutter 9 is at a first position closing the aperture 7 and 8, and the insertion apertures 14 and 15, such that the hole 29 is confronted by a projection 27c provided towards the free end of the locking member 27 provided at one corner at the front of the housing 5. At the other extreme end of the front wall 21 opposite to the side of the shutter 9 provided with the hole 29, an inwardly bent inclined guide 30 is provided in order that the shutter opening and closing pin that is not used for opening or closing the shutter 9 at the time of insertion of the cartridge 1 can easily ride on the front wall 21.

The shutter 9 is attached so as to overlie the front wall section 12 from the upper sides of the halves 2 and 3, such that it can slide freely by being guided along the slide guide slots 20 of the cartridge 5 engaged by the tabs 25. On the front wall section 12 of the cartridge 5, on which the shutter 9 is mounted, there is formed a recess 31 to permit the passage of the bend 28 and the protuberance of the shutter opening and closing arm. A step 32 is formed at the lower half side portion of the recess 31 such that the pin on the shutter opening and closing arm will engage with the hole 29. The step 32 is formed with a depth sufficient for the pin to enter therein, and is so designed that when the pin enters the step 32 through the hole 29, the pin does not partially protrude from the front wall 21 of the shutter 9.

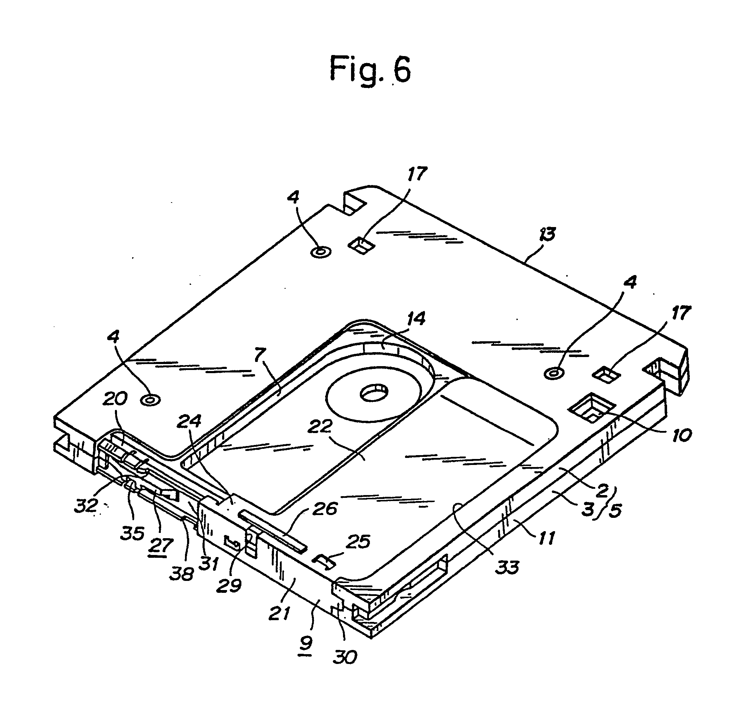

A recess 33 is formed along the perimeter of the insertion apertures 14 and 15 and the apertures 7 and 8 on the upper and lower surface of the cartridge 5, and along one side of these apertures 7, 8 14 and 15, that is, the side where the slide guide section 24 of the shutter 9 projects. The shutter 9 is movable within the extent of the recess 33 between a first position shown in Figure 2 wherein the apertures 7, 8, 14 and 15 are closed by the shutter 9, and a second position shown in Figure 6 wherein the apertures 7, 8, 14 and 15 are opened.

At one inside corner at the front surface side of the upper half 2, there is provided the locking member 27 formed of a synthetic material and having a locking recess 35 in which the bend 28 is engaged for locking the shutter 9 in the first position. Halfway on one lateral side of the locking member 27 extending from an attachment end 27a towards the projection 27c through a semicircular resilient deflecting portion 27b, and at a position closer to the free end than the locking recess 35 engaged by the bend 28 of the shutter 9, a recessed clearance 37 is formed to facilitate the passage of the bend 28 after releasing locking of the shutter 9.

On the front wall section 12 of the cartridge 5, there is formed a recess 38 formed as a cut-out into which enters the shutter opening and closing pin of the shutter opening and closing arm that is not engaged in the hole 29 of the shutter 9. The recess 38 is provided at a position where the pin of the shutter opening and closing arm that does not contribute to the operation of the shutter 9 can enter when the cartridge 1 is introduced correctly, and the shutter 9 had been opened by the other arm. Thus, as shown in Figure 6, the recess 38 is provided at a position facing the outside when the shutter 9 is actuated by one shutter opening and closing arm and is brought to a second position opening the apertures 7, 8, 14 and 15. The recess 38 is formed by partially cutting the front wall section 12 such that the pin of the shutter opening and closing arm enters therein in a direction normal to the thickness direction of the cartridge 1, while the recess 38 is of such a depth that a shutter opening and closing pin therein does not project from the cartridge 5. The recess 38 is provided at a position transversely symmetrical with respect to the lateral side of the cartridge 5, and the position of the hole 29 when the shutter 9 is in the opened second position as indicated in Figure 6.

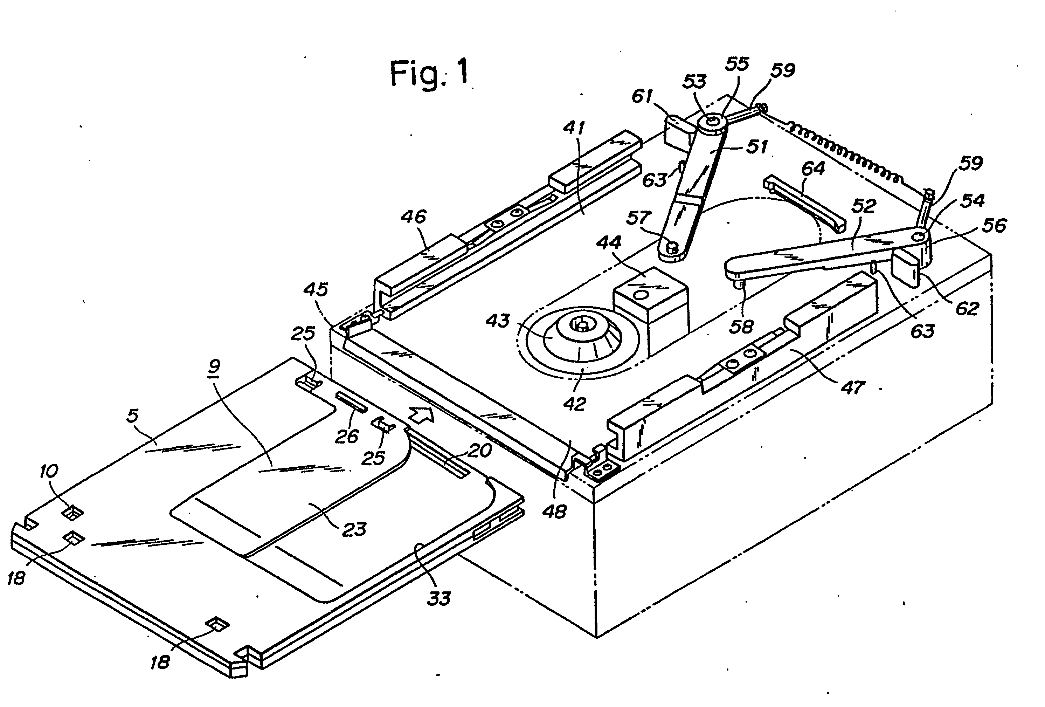

The structure of the recording and/or reproducing apparatus into which the above-described disc cartridge 1 is inserted and attached will now be explained with reference to Figures 1, 7 and 8.

The recording and/or reproducing apparatus is provided with positioning pins, not shown, to engage with the reference apertures 17 and 18 of the cartridge 1 for determining the height-wise and horizontal attachment position of the cartridge 1 on a disc attachment unit 41. As shown in Figure 1, the unit 41 is provided with a disc rotation drive section 43 having a disc table 42 to rotate the disc 6 in the cartridge 1, and a chucking section, not shown, for chucking the disc 6 to the disc table 42 so that the disc 6 will be rotated as one with the disc table 42. There is also provided an optical pick-up unit 44 disposed opposite to the lower surface of the cartridge 1 attached to the unit 41, and caused to be moved radially between the inner and outer peripheries of the disc 6 to effect writing and reading of the information signals on and from the signal recording surface of the disc 6.

The unit 41 is provided with a cartridge supporting frame 45 to support the cartridge 1 inserted through a disc insertion and removal opening provided in an outer casing of the main body of the recording and/or reproducing apparatus. The supporting frame 45 is vertically movably mounted on a chassis also provided with the rotation drive section 43, the pick-up unit 44 and other functional devices. The supporting frame 45 is formed as a flat plate having about the same width as the cartridge 1 and has on both sides thereof opposing cartridge supporting members 46 and 47 each having a U-shaped cross-section for receiving and supporting respective sides of the cartridge 1. The front side of the supporting frame 45 has an opening 48 for receiving the cartridge 1. The supporting frame 45 is supported with the opening 48 facing the disc insertion and removal opening during insertion and removal of the cartridge 1. When the cartridge 1 is to be attached horizontally, the cartridge 1 is moved over the positioning pins and the rotation drive section 43, while the cartridge 1 is also movable vertically after the termination of such horizontal movement so it can be lowered to a position defined by the positioning pins.

On the inner side of the supporting frame 45 opposite the opening 48 for the cartridge 1, there are provided a first shutter opening and closing arm 51 and a second shutter opening and closing arm 52, in opposition to the direction of inserting the cartridge 1. The arms 51 and 52 are provided at the proximate ends with tubular shaft inserting portions 55 and 56 to receive supporting shafts into which supporting shafts 53 and 54 mounted on respective inner sides of the cartridge supporting frame 45 are introduced. The arms 51 and 52 are also provided at the distal ends with upright first and second shutter opening and closing pins 57 and 58 selectively to engage with the hole 29 in the shutter 9 of the cartridge 1. The lengths from the shaft inserting portions 55 and 56 to the pins 57 and 58 are equal.

The supporting shafts 53 and 54 are mounted transversely symmetrically about the centre of rotation of the rotation drive section 43, which centre of rotation is the centre of insertion of the cartridge 1. The first and second shutter opening and closing arms 51 and 52 are rotatably mounted with the shaft inserting portions 55 and 56 passed through the supporting shafts 53 and 54, and with the first and second shutter opening and closing pins 57 and 58 projecting in opposing directions. The arms 51 and 52 have the same lengths, are mounted by the supporting shafts 53 and 54 symmetrically with respect to the centre of insertion of the cartridge 1, and are mounted symmetrically with the centre of insertion of the cartridge 1 as centre.

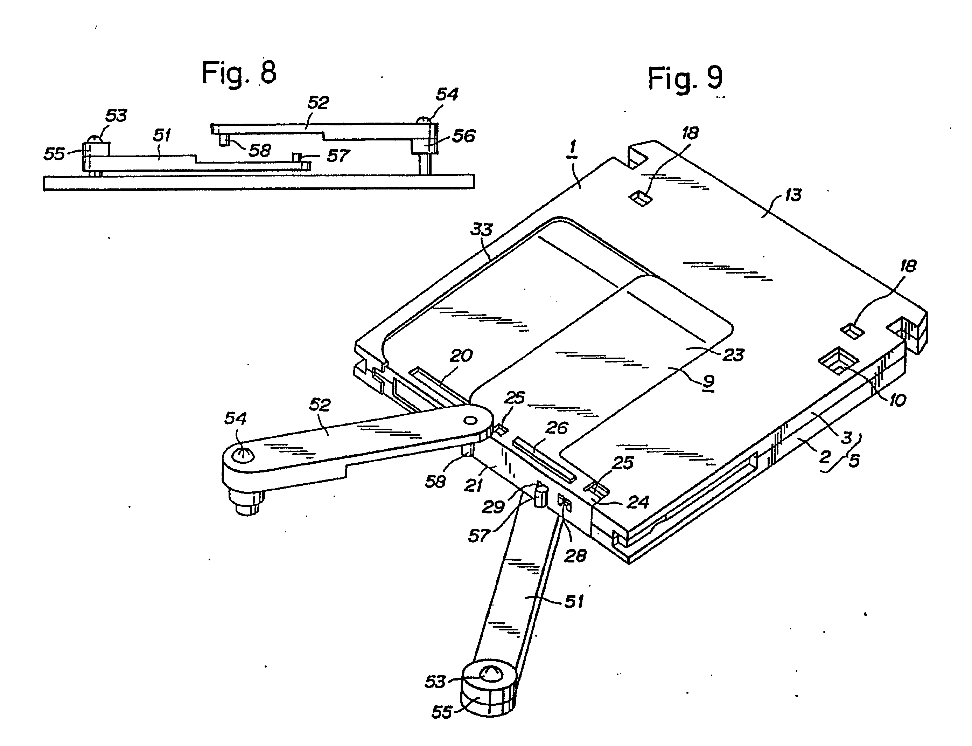

The first and second shutter opening and closing arms 51 and 52 are of such lengths that, when they are rotated in opposite directions about the supporting shafts 53 and 54, the first and second pins 57 and 58 at the ends thereof will overlap with each other in the course of the rotation. The first and second arms 51 and 52 are mounted on the shafts 53 and 54 with a larger height-wise interval than the thickness of the cartridge 1, such that, on insertion of the cartridge 1, the first and second pins 57 and 58 will engage with the hole 29 of the shutter 9 without the arms 51 and 52 abutting on the cartridge 1. The first and second pins 57 and 58 have lengths sufficient to engage with the hole 29 when the cartridge 1 is introduced into the apparatus. The pins 57 and 58 are of such heights that, when they are rotated simultaneously within the plane of the cartridge 1, as shown in Figure 8, they do not abut on each other at the point of intersection of the trajectories thereof.

The shutter opening and closing arms 51 and 52 are urged by a tension spring 60 mounted between two spring retainers 59 projectingly mounted on the shaft inserting portions 55 and 56, in a direction approximately orthogonal to the arms 51 and 52. The arms 51 and 52 are urged in a direction in which the shutter opening and closing pins 57 and 58 are moved away from each other. The rotational position of the first arm 51 is controlled by a first arm control member 61 such that, when the cartridge 1 is introduced with the upper side thereof directing downwards and the first signal recording side of the disc 6 facing the optical pick-up unit 44, the first pin 57 at the end of the arm 51 will be positioned opposite to the hole 29 of the shutter 9. On the other hand, the rotational position of the second arm 52 is controlled by a second arm control member 62 such that, when the cartridge 1 is introduced with the signal recording side thereof facing the optical pick-up device, the second pin 58 at the end of the arm 52 is positioned in a facing relation to the hole 29. Towards the rear end of the supporting frame 45 and in proximity to the first and second arm control members 61 and 62, there are mounted a pair of disc cartridge insertion control projections 63 for controlling the position of insertion of the cartridge 1. As the cartridge 1 is introduced towards abutment with the projections 63, the shutter 9 is moved from the first position to the second position by the arms 51 and 52, for completely exposing the read and write apertures 7 and 8.

Towards the inner side of the unit 41 opposite to the direction of insertion of the cartridge 1, there is provided a stop 64 which abuts on the second or the first shutter opening and closing pin 58 or 57 to inhibit rotation of the arm 52 or 51, if the pin 58 or 57 is caused to rotate by the inserted cartridge 1 without effecting opening or closure of the shutter 9 by entering the recess 38 of the cartridge 1.

The operation of opening the shutter 9 by the shutter opening and closing device will now be described with reference to Figures 1, 7, 9 and 10, for the case where the cartridge 1 is inserted with the first side of the disc 6 facing the optical pick-up unit 44.

As the cartridge 1 is inserted through the disc insertion and removal opening with the upper side of the cartridge 1 upwards, and the optical pick-up device facing the first signal recording surface of the disc 6, as shown in Figure 1, the first shutter opening and closing pin 57 is engaged with the hole 29 of the shutter 9. At this time, the pin 57 abuts on the projection 27c of the locking member 27 provided within the cartridge 5 to shift the locking member 27 to disengage the bend 28 from the locking recess 35 of the locking member 27, to enable sliding of the shutter 9.

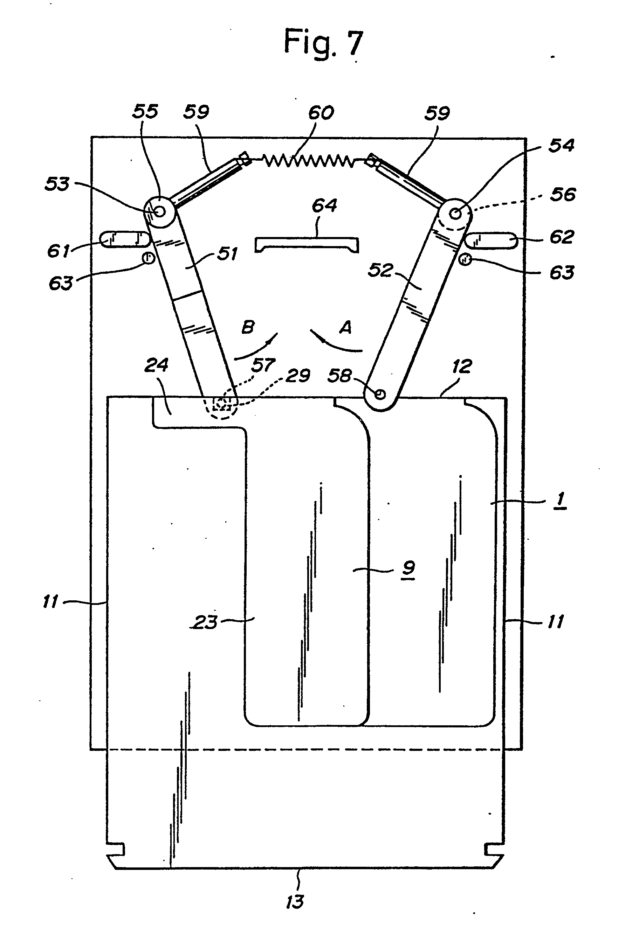

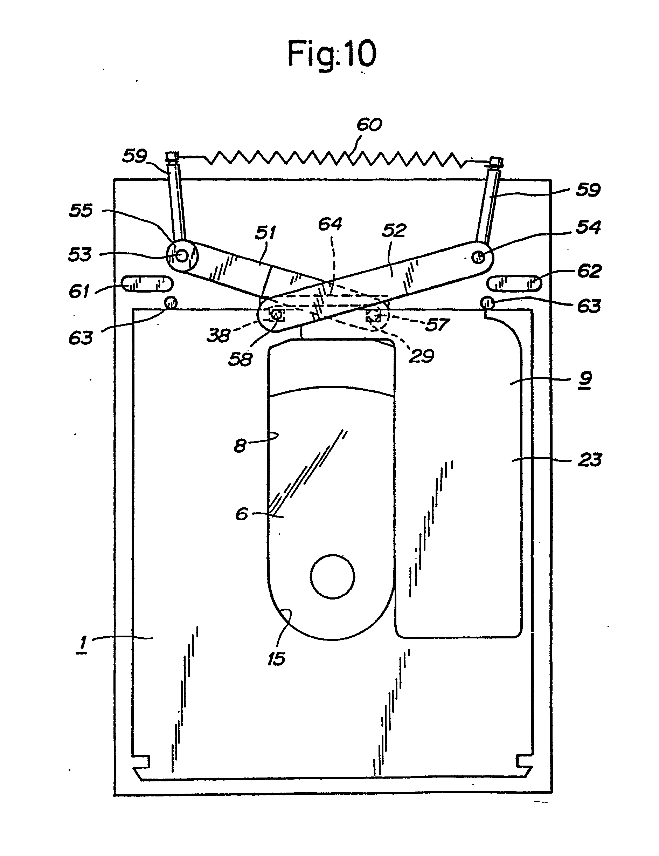

The second shutter opening and closing pin 58 starts to ride on the inclined guide 30, such that the second arm 52 is turned in the direction of an arrow A in Figure 7 against the action of the tension spring 60, in advance of turning of the first arm 51. That is, the second arm 52 is turned with a time lead corresponding to the engagement of the first pin 57 in the hole 29. As the cartridge 1 is inserted further, the first arm 51 starts to be turned in the direction of the arrow B in Figure 7 against the urging of the tension spring 60. At this time, since the first pin 57 is engaged in the hole 29 of the shutter 9, and the shutter 9 is unlocked, the shutter 9 is moved, with the rotation of the first arm 51, from the first position closing the apertures 7, 8, 14 and 15 towards the second position opening the apertures 7, 8, 14 and 15. As the cartridge 1 is inserted further until abutment with the projections 63, the shutter 9 is completely moved to the second position by the first arm 51 for exposing the apertures 7, 8, 14 and 15, as shown in Figure 10.

The second shutter opening and closing arm 52, turned in advance of turning of the first shutter opening and closing arm 51, is turned as the second pin 58 slides from the inclined guide 30 of the shutter 9 on the front wall 21. As the shutter 9 is moved to the second position exposing the apertures 7, 8, 14 and 15, the arm 52 enters the recess 38 thus far covered by the shutter 9.

In this manner, when the cartridge 1 is inserted properly and the shutter 9 has completely opened and apertures 7, 8, 14 and 15, the second shutter opening and closing pin 58 of the second arm 58 that does not contribute to the operation of the shutter 9 enters the recess 38 without abutting on the stop 64. The cartridge 1 is inserted to a position abutting on the projections 63 and in the predetermined attachment position, after turning the first and second arms 51 and 52.

When the cartridge 1 has reached the attachment position, the supporting frame 45 is lowered towards the rotation drive section 43 and towards the pick-up unit 44 for clamping the disc 6 on the disc table 42 for rotation of the disc 6.

If the cartridge 1 is inserted with its lower side downwards, and with the second surface of the disc 6 facing the pick-up unit 44, the situation is the reverse of that in which the first surface of the disc 6 is facing the pick-up device 44, as described above. Thus the second shutter opening and closing pin 58 engages with the hole 29 of the shutter 9, and the first shutter opening and closing pin 57 rides on the inclined guide 30. The first arm 51 is turned against the action of the tension spring 60 in advance of turning of the second arm 52. As the cartridge 1 is inserted until it abuts with the projections 63, the shutter 9 is moved to the second position by the second arm 52, so that the apertures 7, 8, 14 and 15 are completely opened, the first arm 51 being turned while the first pin 57 slides from the inclined guide 30 until it enters the recess 38 thus far covered by the shutter 9.

The other operations are simply the reverse of those for the case of introducing the cartridge 1 with the first surface of the disc 6 facing the pick-up unit 44.

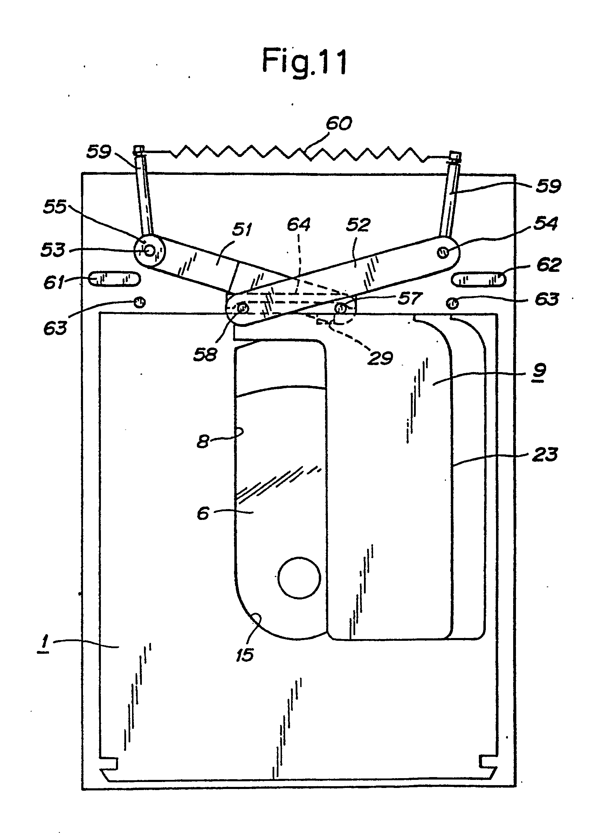

If the first or second shutter opening and closing pin 57 or 58 does not engage with the hole 29 of the shutter 9 (Figure 11), the arms 51 and 52 will be turned by the pins 57 and 58 riding on the front wall 21. The pin 57 or 58 that does not take part in the opening or closure of the shutter 9 is also unable to enter the recess 38 since the shutter 9 is not opened, so the pins 57 and 58 abut on the stop 64 before the cartridge 1 abuts on the projections 63, so inhibiting the bring of the cartridge 1 to the prescribed insertion and attachment position, while also inhibiting the entry of the rotation drive section 43 and inhibiting attachment of the disc 6 to the disc table 42.

Moreover, if the cartridge 1 is inserted with the first or second shutter opening and closing pin 57 or 58 engaging with the hole 29 of the shutter 9, so that the shutter 9 is moved towards the second position opening the aperture 7, 8, 14, 15, but the shutter 9 is not moved completely to said second position due for example to the pin 57 or 58 disengaging from the opening 29 on account of external vibrations, the recess 38 is covered by a portion of the shutter 9, so that the pin 57 or 58 of the other arm 51 or 52 cannot enter the recess 38. Thus the pin 57 or 58 abuts on the stop 64 before the cartridge 1 abuts on the projections 63, so inhibiting the cartridge 1 from reaching the prescribed insertion and attachment position while also inhibiting intrusion or descent towards the rotation drive section 44 and attachment of the disc 6 to the disc table 42.

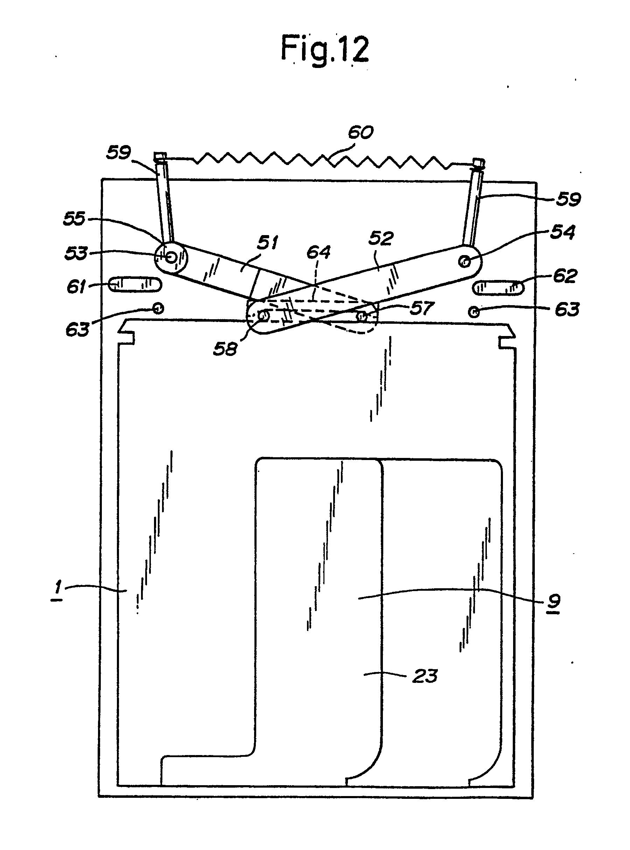

If the cartridge 1 is incorrectly inserted with the rear side wall section 13 leading, the first and second shutter opening and closing arms 51 and 52 turn due to the first and second pins 57 and 58 riding on the flat rear side wall section 13. As shown in Figure 12, the pins 57 and 58 then abut on the stop 64 before the cartridge 1 abuts on the projections 63, thus inhibiting the cartridge 1 from reaching the prescribed attachment position.

To detect the extent of rotation of the shutter opening and closing arms 51 and 52 for determining the correct or in correct insertion of the cartridge 1, an electrical switch can be provided, or it is possible to detect the angle of rotation of the arms 51 and 52 by opto-electrical means, in which case the angle of rotation of the arm 51 or 52 is detected by a photo interceptor or a photo reflector.

This in an embodiment of the present invention, one of the pair of shutter opening and closing arms is selected in accordance with which side of the double-side disc cartridge having a so-called one-side opening type shutter will face the pick-up device, and the pin on the one arm is engaged with the shutter hole to cause turning of the arm so as to cause sliding of the shutter to expose the apertures. When the cartridge has been inserted normally, and the pair of arms have been turned to the normal rotary positions to cause complete opening of the shutter, the pin on the arm that does not contribute to the opening and closure of the shutter enters the recess provided to the front wall section of the cartridge. Conversely, when the cartridge is inserted incorrectly and the shutter opening is not performed completely, the pin on the other arm is prevented from entering the recess. Thus, complete shutter opening can be detected by detecting the turning angle of the other arm.

## Claims

1. Disc cartridge apparatus comprising a disc cartridge (1), having a shutter (9) movable between a first position covering signal read and write apertures (7, 8) in said cartridge (1) and a second position exposing said apertures (7, 8) in a direction perpendicular to the direction of insertion of the cartridge into said apparatus, in combination with a device (51, 52, 57, 58) for opening and closing said shutter (9) ;
said cartridge (1) comprising :
an engaging hole (29) in the front wall (21) of said shutter (9) ; and
a recess (38) in the edge of said cartridge (1) which is leading when said cartridge (1) is correctly inserted into said device (51, 52, 57, 58), said recess (38) being covered when said shutter (9) is in said first position and exposed when said shutter (9) is in said second position ;
said device (51, 57 : 52, 58) comprising :
a pair of rotary arms (51, 57 ; 52, 58) one of which engages with said engaging hole (29) as said cartridge is inserted into said device (51, 52, 57, 58) and is turned as said cartridge (1) is further inserted, thereby sliding said shutter (9) from said first to said second position, and the other of which engages with said recess (38) when said recess (38) has been exposed by said sliding of said shutter (9) ;
and wherein :
failure of said other rotary arm (51, 57 ; 52, 58) to engage with said recess (38) inhibits full insertion of said cartridge (1) into said device (51, 52, 57, 58).

2. Apparatus according to claim 1 wherein said pair of rotary arms (51, 57 ; 52, 58) are arranged symmetrically so that one arm (51, 57) engages with said engaging hole (29) and the other arm (52, 58) engages with said recess (38) when said cartridge (1) is inserted one way up, and vice versa when said cartridge (1) is inserted the other way up.

3. Apparatus according to claim 1 or claim 2 wherein each of said pair of rotary arms (51, 57 ; 52, 58) comprises an arm portion (51, 52) having mounted thereon adjacent to one end thereof a pin (57, 58) for engagement with said engaging hole (29) or said recess (38).

4. Apparatus according to claim 3 comprising spring means (60) urging said pair of rotary arms (51, 57 ; 52, 58) in the direction for urging said shutter (9) towards said first position.

5. Apparatus according to claim 4 wherein said spring means (60) is a spring connecting the ends of said arm portions (51, 52) remote from said pins (57, 58).

6. Apparatus according to any one of the preceding claims wherein said cartridge (1) comprises disc table insertion apertures (14, 15) contiguous with said apertures (7, 8) respectively, said insertion apertures (14, 15) being covered when said shutter (9) is in said first position and exposed when said shutter (9) is in said second position.

## Patentansprüche

1. Plattenkassetten-Vorrichtung mit einer Plattenkassette (I), die einen Verschluß (9) aufweist, der zwischen einer Signal-Lese- und Schreiböffnungen (7, 8) in der Kassette (1) abdeckenden ersten Position und einer diese Öffnungen (7, 8) freigebenden zweiten Position in einer Richtung senkrecht zur Einführungsrichtung der Kassette in die Vorrichtung bewegbar ist in Kombination mit einer Einrichtung (51, 52, 57, 58) zum Öffnen und Schließen des Verschlusses (9), wobei die Kassette (1) umfaßt:
eine Eingriffsöffnung (29) in der vorderen Wand (21) des Verschlusses (9), und
eine Ausnehmung (38) in dem Rand der Kassette (1), der vorn ist, wenn die Kassette (1) korrekt in die Einrichtung (51, 52, 57, 58) eingeführt wird, wobei die Ausnehmung (38) abgedeckt ist, wenn der Verschluß (9) sich in der ersten Position befindet, und freigegeben ist, wenn der Verschluß (9) sich in der zweiten Position befindet;
wobei die Einrichtung (51, 57; 52, 58) umfaßt: ein Paar Schwenkarme (51, 57; 52, 58), von denen einer beim Einführen der Kassette in die Einrichtung (51, 52, 57, 58) in die Eingriffsöffnung (29) eingreift und beim weiteren Einführen der Kassette (1) gedreht wird und dadurch den Verschluß (9) von der ersten in die zweite Position verschiebt, und von denen der andere in die Ausnehmung (38) eingreift, wenn die Ausnehmung (38) durch Verschiebung des Verschlusses (9) freigegeben worden ist;
und wobei das Nichteingreifen des anderen Schwenkarmes (51, 57; 52, 58) in die Ausnehmung (38) das vollständige Einführen der Kassette (1) in die Einrichtung (51, 52, 57, 58) verhindert.

2. Vorrichtung nach Anspruch 1, in welcher die beiden Schwenkarme (51, 57; 52, 58) symmetrisch angeordnet sind, so daß ein Arm (51, 57) in die Eingriffsöffnung (29) eingreift und der andere Arm (52, 58) in die Ausnehmung (38) eingreift, wenn die Kassette (I) mit einer Seite nach oben eingeführt wird, und umgekehrt, wenn die Kassette (1) mit der anderen Seite nach oben eingeführt wird.

3. Vorrichtung nach Anspruch 1 oder 2, in welcher jeder der beiden Schwenkarme (51, 57; 52, 58) einen Armabschnitt (51, 52) umfaßt, an dem nahe seinem einen Ende ein Stift (57, 58) für den Eingriff in die Eingriffsöffnung (29) oder die Ausnehmung (38) befestigt ist.

4. Vorrichtung nach Anspruch 3, mit einer Federanordnung (60), die die beiden Schwenkarme (51, 57; 52, 58) in Richtung zur zwangsweisen Beaufschlagung des Verschlusses (9) in Richtung zur ersten Position drückt.

5. Vorrichtung nach Anspruch 4, in welcher die Federanordnung (60) eine Feder ist, die die von den Stiften (57, 58) abgewandten Enden der Armabschnitte (51, 52) verbindet.

6. Vorrichtung nach einem der vorhergehenden Ansprüche, in welcher die Kassette (1) an die Öffnungen (7, 8) jeweils angrenzende Plattenteller-Einsatzöffnungen (14, 15) aufweist, wobei die Einsatzöffnungen (14, 15) abgedeckt sind, wenn der Verschluß (9) sich in der ersten Position befindet, und freigegeben sind, wenn der Verschluß (9) sich in der zweiten Position befindet.

## Revendications

1. Appareil à cartouche de disque comportant une cartouche de disque (1), ayant un volet (9) mobile entre une première position recouvrant des ouvertures de lecture et écriture de signal (7, 8) dans la dite cartouche (1) et une deuxième position exposant les dites ouvertures (7, 8) dans une direction perpendiculaire à la direction d'insertion de la cartouche dans le dit appareil, en combinaison avec un dispositif (51, 52, 57, 58) pour l'ouverture et la fermeture du dit volet (9);
la dite cartouche (1) comportant:
un trou d'engagement (29) dans la paroi avant (21) du dit volet (9); et
un renfoncement (38) dans le bord de la dite cartouche (1) qui est à l'avant lorsque la dite cartouche (1) est correctement insérée dans le dit dispositif (51, 52, 57, 58), le dit renfoncement (38) étant recouvert lorsque le dit volet (9) est dans la dite première position et exposé lorsque le dit volet (9) est dans la dite deuxième position;
le dit dispositif (51, 57; 52, 58) comportant: une paire de bras rotatifs (51, 57; 52, 58) dont l'un engage le dit trou d'engagement (29) lorsque la dite cartouche est insérée dans le dit dispositif (51, 52, 57, 58) et tourne lorsque la dite cartouche (1) est davantage insérée, faisant ainsi coulisser le dit volet (9) de la dite première vers la dite deuxième position, et dont l'autre engage le dit renfoncement (38) lorsque le dit renfoncement (38) a été exposé par le dit coulissement du dit volet (9);
et dans lequel: la défaillance du dit autre bras rotatif (51, 57; 52, 58) destiné à engager le dit renfoncement (38) empêche l'insertion totale de la dite cartouche (1) dans le dit dispositif (51, 52, 57, 58).

2. Appareil selon la revendication 1, dans lequel la dite paire de bras rotatifs (51, 57 ; 52, 58) est agencée symétriquement de telle sorte que un bras (51, 57) engage le dit trou d'engagement (29) et l'autre bras (52, 58) engage le dit renfoncement (38) lorsque la dite cartouche (1) est insérée dans un sens, et vice versa lorsque la dite cartouche (1) est insérée dans l'autre sens.

3. Appareil selon la revendication 1 ou la revendication 2, dans lequel chaque bras de la dite paire de bras rotatifs (51, 57 ; 52, 58) comporte une partie de bras (51, 52) ayant monté dessus de manière adjacente à une extrémité un téton (57, 58) pour engagement dans le dit trou d'engagement (29) ou le dit renfoncement (38).

4. Appareil selon la revendication 3, comportant des moyens élastiques (60) poussant la dite paire de bras rotatifs (51, 57 ; 52, 58) dans la direction de poussée du dit volet (9) vers la dite première position.

5. Appareil selon la revendication 4, dans lequel les dits moyens élastiques (60) sont constitués par un ressort reliant les extrémités des dites parties de bras (51, 52) éloignées des dits tétons (57, 58).

6. Appareil selon l'une quelconque des revendications précédentes, dans lequel la dite cartouche (1) comporte des ouvertures d'insertion de platine de disque (14, 15) respectivement contiguës aux dites ouvertures (7, 8), les dites ouvertures d'insertion (14, 15) étant recouvertes lorsque le dit volet (9) est dans la dite première position et exposées lorsque le dit volet (9) est dans la dite deuxième position.

Fig. 1

# Fig. 2

Fig. 3

# Fig. 4

# Fig. 5

# Fig. 6

# Fig. 7

# Fig. 8

# Fig. 9

EP 0 248 908 B1

# Fig:10

# Fig.11

# Fig.12